Europäisches Patentamt

European Patent Office

Office européen des brevets

(19)

(11) **EP 0 741 448 B1**

(12) **FASCICULE DE BREVET EUROPEEN**

(45) Date de publication et mention
de la délivrance du brevet:
**09.06.1999 Bulletin 1999/23**

(51) Int Cl.⁶: **H02P 1/28**

(21) Numéro de dépôt: **96400888.2**

(22) Date de dépôt: **25.04.1996**

(54) **Procédé de commande d'un gradateur et dispositif pour la mise en oeuvre de ce procédé**

Anlaufsteuerungsverfahren und Vorrichtung zu dessen Betrieb

Soft start control method and device

(84) Etats contractants désignés:
**DE ES IT**

(30) Priorité: **05.05.1995 FR 9505502**

(43) Date de publication de la demande:
**06.11.1996 Bulletin 1996/45**

(73) Titulaire: **SCHNEIDER ELECTRIC SA**
**92100 Boulogne Billancourt (FR)**

(72) Inventeurs:
• **Chouffier, Jean-Louis**
**27120 Menilles (FR)**

• **Duclos, Pascal**
**77390 Verneuil l'Etang (FR)**
• **Cornilleau, Hubert**
**78480 Verneuil sur Seine (FR)**

(74) Mandataire: **Saint Martin, René**
**Schneider Electric SA,**
**Service Propriété Industrielle,**
**33 bis, avenue du Maréchal Joffre**
**92000 Nanterre (FR)**

(56) Documents cités:
EP-A- 0 030 497          EP-A- 0 194 400
EP-A- 0 446 936          EP-A- 0 621 680

EP 0 741 448 B1

## Description

La présente invention conceme un procédé de commande d'un moteur au moyen d'un gradateur relié d'une part à un réseau alternatif à fréquence fixe, d'autre part au moteur, et comprenant des interrupteurs statiques associés à au moins une phase du moteur et pilotés par un circuit de commande.

Un gradateur est couramment utilisé en association avec un moteur pour démarrer ou décélérer celui-ci de manière progressive.

La mise sous tension d'un moteur ainsi que son démarrage (accélération progressive de la vitesse électrique) engendrent habituellement des contraintes électriques telles qu'une consommation de courant élevée avec des pointes de courant importantes, pouvant atteindre six à huit fois le courant nominal $I_N$. Le rôle d'un gradateur est alors d'assurer le démarrage du moteur en augmentant progressivement la tension appliquée au moteur sans l'apparition de pointes de courant. Un procédé pour moduler la valeur efficace de la tension consiste à imposer un retard à l'amorçage du courant de façon à réduire le temps de conduction des interrupteurs. Le retard à l'amorçage, référencé sur le courant, est le temps écoulé entre le moment d'annulation du courant dans une phase du moteur et le réamorçage du courant dans cette phase. C'est à l'utilisateur de régler avantageusement ce retard de manière à assurer une mise sous tension et un démarrage sans pointe de courant.

Le démarrage du moteur peut aussi entraîner des contraintes mécaniques tels que des à-coups sur le moteur. Le procédé précité permet certes de limiter les contraintes électriques mais, ne s'avère cependant pas concluant pour limiter les contraintes mécaniques.

Lorsque le gradateur est utilisé en tant que dispositif de décélération pour un moteur, le paramètre de commande utilisé est généralement aussi le retard à l'amorçage des interrupteurs. Ce procédé connu présente néanmoins les mêmes inconvénients qu'au démarrage.

L'invention a pour but de limiter de manière satisfaisante les contraintes électriques et les contraintes mécaniques entraînées par le démarrage et la décélération d'un moteur commandé par un gradateur.

Pour parvenir à ce résultat, le procédé selon la revendication 1 consiste à réaliser un asservissement du couple électromagnétique du moteur à une valeur de consigne variable dans l'étape de démarrage ou de décélération du moteur. La valeur du couple est estimée et comparée afin de déterminer un signal d'erreur qui est ensuite traité pour émettre une nouvelle valeur du retard à l'amorçage avec lequel sont commandés les interrupteurs. L'estimation du couple est réalisée en estimant respectivement, la puissance transmise par le réseau au moteur et les pertes statoriques.

La puissance transmise sera de préférence calculée à partir de la valeur du fondamental du courant d'au moins une phase de la charge, et à partir du retard du fondamental du courant d'au moins une phase par rapport à la tension simple correspondante du réseau. Ce mode de calcul, contrairement au mode de calcul connu utilisant les valeurs instantanées du courant et de la tension, permet de réduire le coût du dispositif de mise en oeuvre du procédé puisqu'il n'est pas nécessaire d'utiliser des capteurs de tension, seul est utile au moins un capteur de courant.

Selon la revendication 7, un dispositif pour la mise en oeuvre du procédé précédemment défini comporte des moyens d'asservissement du couple électromagnétique qui comprennent des moyens d'estimation du couple à partir de l'estimation de la puissance électrique transmise par le réseau au moteur et de l'estimation des pertes statoriques du moteur, un comparateur pour déterminer un signal d'erreur entre la valeur estimée du couple et une valeur de consigne, et un intégrateur pour traiter le signal d'erreur et en déduire une valeur du retard à l'amorçage imposé au circuit de commande.

L'invention va maintenant être décrite avec plus de détail en se référant à titre d'exemple aux dessins annexés :

- la figure 1 est un schéma fonctionnel du mode de réalisation de commande d'un gradateur associé à un moteur selon l'invention ;

- les figures 2a, 2b et 2c représentent les allures, respectivement, de la vitesse, du couple et de la puissance, lors d'une simulation d'asservissement du couple ;

- les figures 3a, 3b et 3c représentent les allures, respectivement, de la vitesse, de la puissance et du couple lors d'une simulation d'asservissement de la puissance.

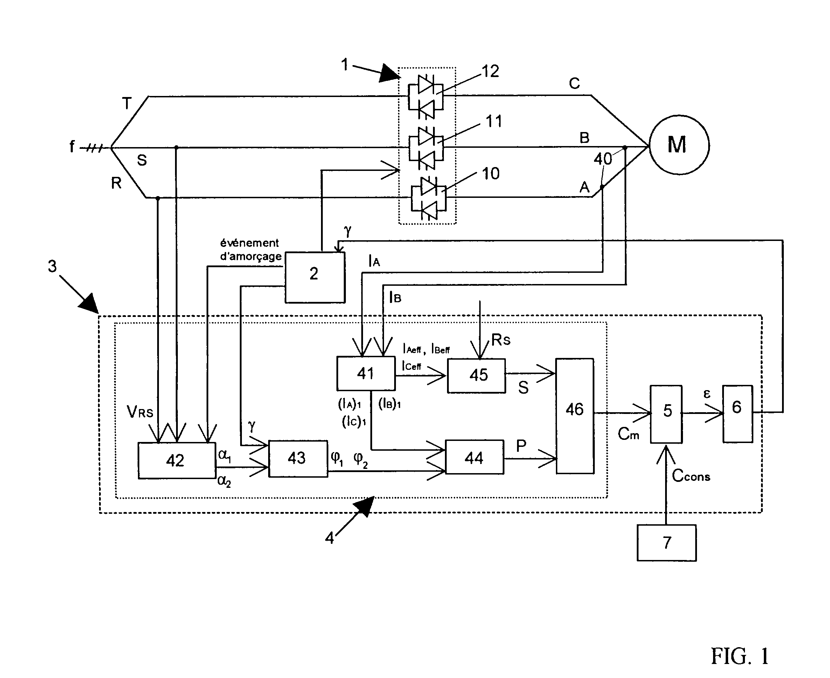

Le gradateur triphasé selon l'invention, repéré 1 sur la figure 1, est relié aux conducteurs de phase R, S, T d'un réseau triphasé à fréquence fixe f. Le gradateur comprend trois couples 10, 11, 12 d'interrupteurs statiques ; chaque couple est constitué de deux thyristors montés tête-bêche et est relié à un enroulement respectif des phases A, B et C d'un moteur M triphasé de type asynchrone. Les gâchettes des thyristors sont commandées par un circuit de commande 2. Au lieu de thyristors, on peut bien-sûr utiliser d'autres interrupteurs à commutation commandable.

Le circuit de commande 2 a pour rôle d'envoyer aux thyristors les ordres d'amorçage qui sont caractérisés par un temps γ, appelé retard à l'amorçage et référencé sur le courant. Ce temps γ est le temps écoulé entre l'instant du dernier passage à zéro du courant dans une phase du moteur et l'instant de réamorçage du courant dans cette phase lorsque le courant change de signe.

Des moyens 3 d'asservissement du couple $C_m$ du moteur sont associés au moteur et au circuit de commande 2 des thyristors. Ces moyens permettent une réalisation du procédé à boucle dite fermée. Ils comprennent des moyens 4 d'estimation d'une valeur du couple $C_m$ du moteur, un comparateur 5 destiné à déterminer un signal d'erreur ε qui est fonction de la différence entre la valeur estimée $C_m$ du couple et une valeur de consigne $C_{cons}$, et un intégrateur 6 destiné à traiter le signal d'erreur ε pour en déduire une valeur de retard γ à l'amorçage qui est introduite dans le circuit de commande 2.

Les moyens d'estimation du couple 4 permettent de mettre en oeuvre un calcul du couple électromagnétique du moteur. Le couple est calculé à partir de la pulsation fixe $\Omega_s$ du réseau ($\Omega_s=2\Pi f$) ainsi que de la puissance $P_E$ transmise dans l'entrefer du moteur qui peut être estimée à partir de la puissance P transmise par le réseau au moteur et des pertes statoriques S estimées sous la forme de pertes Joule, les pertes fer statoriques étant négligées dans le mode de réalisation donné.

Notons qu'il est nécessaire de tenir compte des pertes statoriques S pour l'asservissement du couple afin de parvenir à un démarrage en douceur. L'asservissement du couple n'est en effet pas équivalent à un asservissement de la puissance.

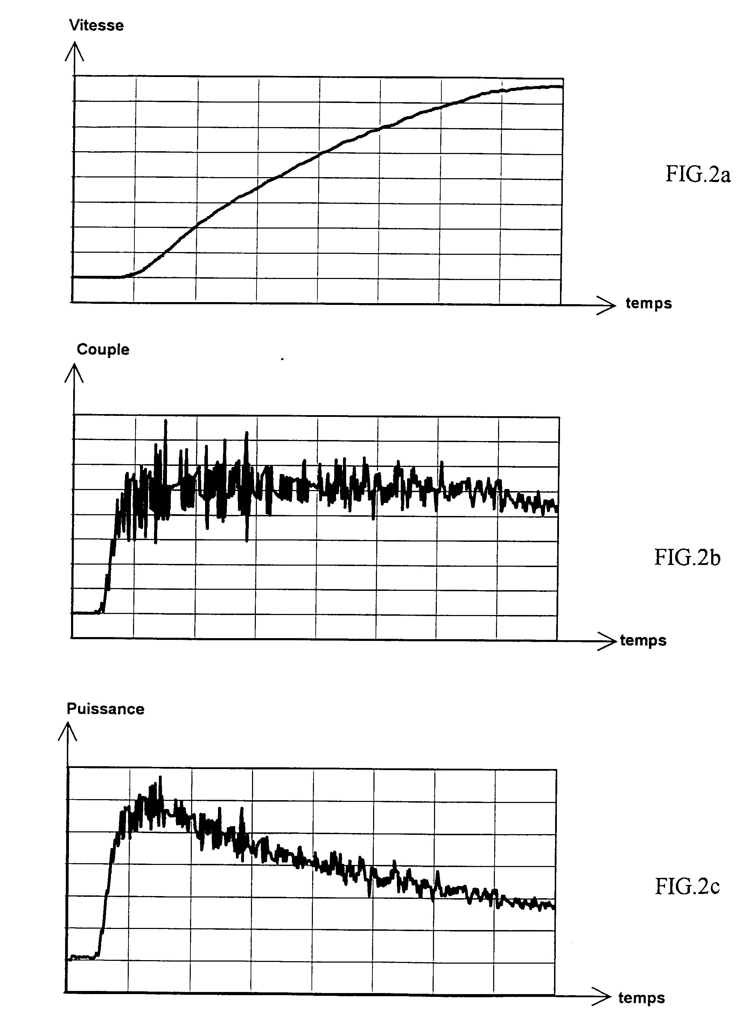

Ainsi, les figures 2a, 2b et 2c représentant respectivement les allures de la vitesse, du couple et de la puissance lors d'un asservissement du couple à une valeur sensiblement constante, illustrent que la valeur de la puissance (figure 2c) ne reste pas constante pendant la phase d'asservissement.

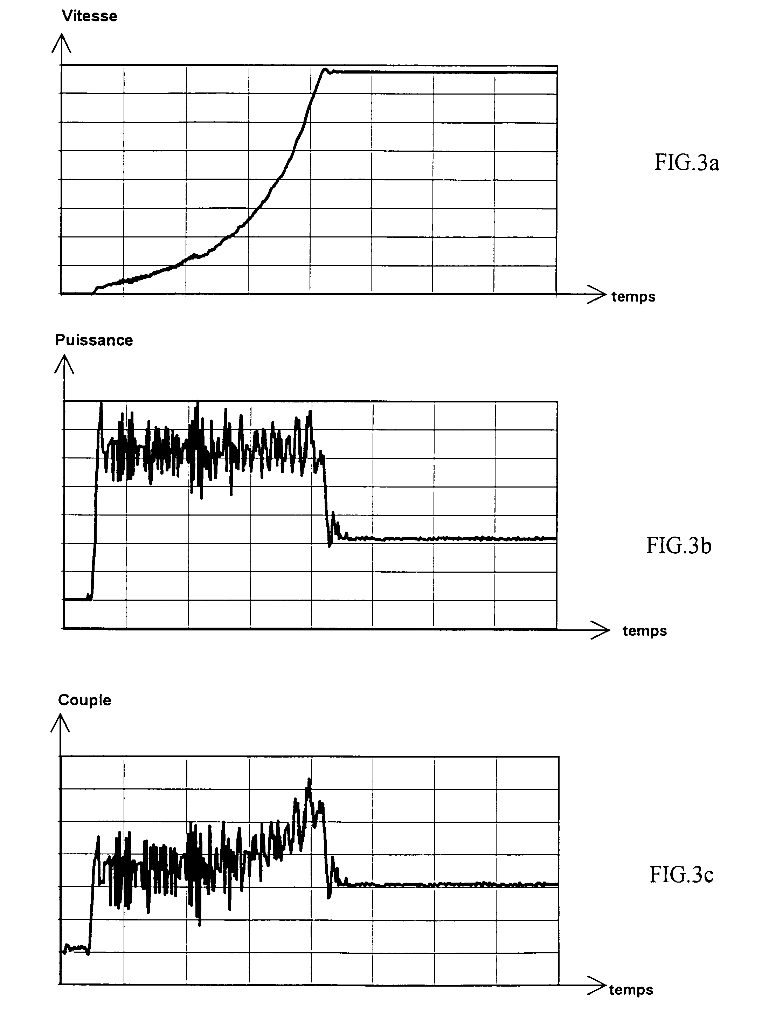

Pour confirmation, la figure 3a, représentant l'allure de la vitesse lors d'un asservissement de la puissance à une valeur sensiblement constante (figure 3b), montre une courbe présentant une pente d'accélération bien moins douce que celle de la courbe de vitesse illustrée à la figure 2a lors de l'asservissement du couple.

Afin d'estimer la puissance active P et les pertes statoriques S pour en déduire le couple électromagnétique $C_m$, les moyens 4 d'estimation du couple $C_m$ comprennent des organes de lecture de courant 40, un organe de calcul de courant 41, un bloc 42 d'estimation du retard à l'amorçage α des thyristors référencé à la tension, un bloc de calcul 43 du retard φ du fondamental du courant sur la tension, un bloc de calcul 44 de la puissance transmise P au moteur, un bloc 45 de calcul des pertes Joule S, et un bloc soustracteur 46 de calcul du couple $C_m$ du moteur.

Les organes de lecture de courant 40 sont par exemple au nombre de deux, pour fournir des signaux $I_A$, $I_B$, représentatifs du courant circulant dans les phases A et B du moteur. L'organe de calcul 41 situé en aval des organes de lecture 40 permet à partir de ces signaux de déduire le signal $I_C$ du courant circulant dans la phase C, d'extraire chaque fondamental de courant $(I_A)_1$, $(I_B)_1$, $(I_C)_1$ et de calculer les valeurs résultantes du courant efficace $I_{Aeff}$, $I_{Beff}$, $I_{Ceff}$ dans les trois phases côté moteur.

Le bloc 42 permet d'estimer le retard α à l'amorçage du courant dans les thyristors référencé à la tension simple du réseau; ce retard correspond au temps écoulé entre l'instant de passage à zéro de la tension simple appliquée à une phase du gradateur côté réseau et l'instant d'amorçage du courant dans les thyristors correspondant à la même phase.

Le bloc 42 reproduit le signal de la tension simple de la phase R du réseau à partir de la mesure de la tension composée $V_{RS}$ entre les phases R et S du réseau. Un moyen d'évaluation du temps α peut par exemple consister en un compteur interne au bloc 42; le compteur se déclenche à chaque passage à zéro de la tension simple et délivre le temps écoulé $\alpha_1$ à l'arrivée subséquente de l'événement d'amorçage du courant $I_A$ dans le couple 10 de thyristors émis par le circuit de commande 2. De manière identique, le bloc 42 estime et délivre aussi le retard à l'amorçage $\alpha_2$ pour la phase B du moteur.

Le bloc de calcul 43 reçoit en entrée d'une part les valeurs $\alpha_1$ et $\alpha_2$ transmises par le bloc 42, et d'autre part la valeur γ fournie par le circuit de commande 2. Le bloc 43 délivre en sortie les valeurs $\varphi_1$ et $\varphi_2$ du retard du fondamental du courant $(I_A)_1$ sur la tension simple de la phase R du réseau et respectivement du retard du fondamental du courant $(I_B)_1$ sur la tension simple de la phase S du réseau. Le calcul du retard du fondamental est réalisé à partir de la relation connue $\varphi = \alpha - \frac{\gamma}{2}$.

Le bloc de calcul 44 reçoit en entrée les valeurs $\varphi_1$ et $\varphi_2$ ainsi que les valeurs du fondamental de chaque courant $(I_A)_1$, $(I_B)_1$, $(I_C)_1$ et de la tension délivrée par le réseau. La tension est supposée constante et paramétrée mais peut être mesurée dans une variante de l'invention. Le bloc 44 délivre en sortie la puissance P transmise au moteur.

Le bloc de calcul 45 reçoit en entrée, d'une part les valeurs efficaces du courant $I_{Aeff}$, $I_{Beff}$, $I_{Ceff}$, et d'autre part, la valeur de la résistance statorique $R_S$ qui est un paramètre réglable selon le type de moteur utilisé. Le bloc engendre en sortie la valeur S des pertes Joule $RI^2$ assimilée à celle des pertes statoriques.

Le bloc soustracteur 46 reçoit en entrée la puissance transmise P ainsi que les pertes S pour délivrer en sortie la valeur du couple $C_m = \frac{P-S}{\Omega_S}$.

Le comparateur 5 reçoit sur ses deux entrées, respectivement la valeur du couple estimé $C_m$ et la valeur du couple de consigne $C_{cons}$ imposé par un générateur de rampe 7 déterminant une rampe d'accélération et une rampe de décélération. Il compare ces deux valeurs et fournit en sortie un signal d'erreur ε qui est transmis à l'entrée de l'intégrateur 6. L'intégrateur établit en sortie une nouvelle valeur du retard γ à l'amorçage, égale à la valeur précédente incrémentée d'une valeur qui est fonction de l'erreur ε, afin de corriger le couple du moteur. Cette nouvelle valeur γ est, en retour, imposée au circuit de commande 2.

Le fonctionnement du dispositif pour mettre en oeuvre le procédé va maintenant être décrit.

Le circuit de commande donne l'ordre d'amorcer les thyristors dès que le temps de retard à l'amorçage $\gamma$ est écoulé.

Les organes de lecture de courant 40 délivrent les signaux de courant $I_A$ et $I_B$ circulant dans les phases A et B du moteur. A partir de ces signaux sont déduites grâce à l'organe 41 les valeurs du fondamental de chaque courant $(I_A)_1$, $(I_B)_1$, $(I_C)_1$ et les valeurs des courants efficaces $I_{Aeff}$, $I_{Beff}$, $I_{Ceff}$. Ces valeurs sont envoyées aux blocs 44 et 45.

Par ailleurs, le bloc 42 estime les valeurs $\alpha_1$ et $\alpha_2$ du retard à l'amorçage référencé sur la tension, ces valeurs sont envoyées au bloc 43 qui distribue à son tour au bloc 44 les valeurs $\varphi_1$ et $\varphi_2$ du retard du fondamental du courant sur la tension simple du réseau.

Les blocs de calcul 44 et 45 délivrent les valeurs de la puissance P transmise au moteur et des pertes statoriques S.

Puis le bloc de calcul 46 délivre à partir des données P et S la valeur du couple du moteur $C_m$.

La comparaison du couple et son traitement sont réalisées de façon connue en soi; enfin, la nouvelle valeur du retard à l'amorçage est appliquée en retour au circuit de commande 2.

En variante, le retard à l'amorçage, c'est-à-dire le retard à l'amorçage intégré au circuit de commande 2 pour piloter les thyristors, peut être non pas référencé au courant comme décrit ci-dessus mais référencé à la tension simple. La valeur du retard à l'amorçage $\alpha$ référencé à la tension simple est donc imposée au circuit de commande 2 et la valeur du retard à l'amorçage $\gamma$ référencé au courant est alors estimée par le bloc 42. L'estimation de $\gamma$ est réalisée en observant la tension aux bornes des thyristors; un compteur se déclenche dès l'apparition d'une tension, qui indique qu'aucun courant ne circule dans les thyristors, et délivre le temps écoulé à l'instant d'amorçage du courant émis par le circuit de commande 2.

**Revendications**

1. Procédé de commande d'un moteur au moyen d'un gradateur (1) relié d'une part à un réseau alternatif à fréquence fixe, d'autre part au moteur, et comprenant des interrupteurs statiques associés à au moins une phase du moteur et pilotés par un circuit de commande (2), caractérisé en ce que

   - le couple électromagnétique ($C_m$) du moteur est asservi à une valeur de consigne ($C_{cons}$) variable dans l'étape de démarrage ou de décélération du moteur;
   - il consiste à estimer la valeur du couple ($C_m$) du moteur, à déterminer un signal d'erreur ($\varepsilon$) entre la valeur du couple estimée et la valeur de consigne, à traiter ledit signal d'erreur pour élaborer le retard à l'amorçage ($\gamma$ ou $\alpha$) avec lequel sont commandés les interrupteurs.

   - le couple est estimé à partir d'une estimation de la puissance transmise (P) au moteur par le réseau et d'une estimation des pertes statoriques (S) du moteur.

2. Procédé de commande selon la revendication 1, caractérisé en ce qu'il consiste à mesurer, dans au moins une phase de la charge, le signal du courant ($I_A$) circulant dans cette phase et à établir les valeurs du fondamental de courant ($(I_A)_1$) et du courant efficace ($I_{Aeff}$) de ce signal.

3. Procédé de commande selon la revendication 1, caractérisé en ce qu'il consiste à estimer le retard à l'amorçage du courant (a) référencé à la tension simple appliquée à une phase du moteur, lorsque le retard à l'amorçage (y) avec lequel sont commandés les interrupteurs est référencé au courant.

4. Procédé de commande selon la revendication 1, caractérisé en ce qu'il consiste à estimer le retard à l'amorçage du courant (y) référencé au courant circulant dans une phase du moteur, lorsque le retard à l'amorçage (a) avec lequel sont commandés les interrupteurs est référencé à la tension.

5. Procédé de commande selon la revendication 2, caractérisé en ce qu'il consiste à calculer, dans au moins une phase de la charge, le retard ($\varphi$) du fondamental du courant circulant dans cette phase par rapport à la tension simple correspondante du réseau.

6. Procédé de commande selon la revendication 5, caractérisé en ce que la puissance transmise (P) est calculée à partir de la valeur du fondamental ($(I_A)_1$) du courant d'au moins une phase de la charge, et du retard ($\varphi$) du fondamental du courant d'au moins une phase de la charge par rapport à la tension simple correspondante du réseau.

7. Dispositif pour la mise en oeuvre du procédé selon la revendication 1, caractérisé en ce qu'il comporte des moyens (3) d'asservissement du couple électromagnétique du moteur comprenant des moyens (4) d'estimation du couple ($C_m$) à partir de l'estimation de la puissance transmise par le réseau au moteur et de l'estimation des pertes statoriques du moteur, un comparateur (5) pour déterminer un signal d'erreur ($\varepsilon$) entre la valeur estimée du couple et une valeur de consigne ($C_{cons}$), et un intégrateur (6) pour traiter ledit signal d'erreur et en déduire une valeur du retard à l'amorçage imposé au circuit de commande (2).

**8.** Dispositif pour la mise en oeuvre du procédé selon la revendication 7, caractérisé en ce que les moyens (4) comprennent au moins un organe de lecture de courant (40) pour fournir un signal représentatif du courant circulant dans au moins une phase du moteur, et des blocs de calcul (44, 45, 46) respectifs de la puissance transmise (P) au moteur par le réseau, des pertes statoriques (S) et du couple ($C_m$) du moteur.

**9.** Dispositif pour la mise en oeuvre du procédé selon la revendication 7 ou 8, caractérisé en ce que les moyens (4) comprennent un organe de calcul de courant (41) pour déterminer, dans au moins une phase du moteur, la valeur du fondamental du courant et la valeur du courant efficace, un bloc de mesure (42) du retard ($\alpha$ ou $\gamma$) à l'amorçage d'au moins un couple d'interrupteurs référencé à la tension ou bien au courant, et un bloc de calcul (43) du retard ($\varphi$) du fondamental du courant sur la tension simple dans au moins une phase du moteur.

**Patentansprüche**

**1.** Steuerverfahren eines Motors mittels eines Stufenschalters (1), der einerseits an ein Wechselspannungsnetz mit fester Frequenz und andererseits am Motor angeschlossen ist und statische Schalter umfasst, die mindestens einer Phase des Motors zugeordnet sind und von einem Steuerkreis (2) gesteuert werden, dadurch gekennzeichnet, dass

- das elektromagnetische Moment ($C_m$) des Motors während der Anlauf- oder Abbremsetappe des Motors von einem variablen Sollwert ($C_{soll}$) angesteuert wird ;
- es darin besteht, den Wert des Momentes ($C_m$) des Motors zu schätzen, ein Fehlersignal ($\varepsilon$) zwischen dem geschätzten Momentwert und dem Sollwert zu bestimmen, das besagte Fehlersignal zu verarbeiten, um die Zündungsverzögerung ($\gamma$ oder $\alpha$) zu erstellen, mit der die Schalter gesteuert werden ;
- das Moment ab einer Schätzung der vom Netz an den Motor übertragenen Leistung (P) und ab einer Schätzung der statorischen Verluste (S) des Motors geschätzt wird.

**2.** Steuerverfahren nach Anspruch 1, dadurch gekennzeichnet, dass es darin besteht, in mindestens einer Phase der Last das Signal ($I_A$) des in dieser Phase fliessenden Stromes zu messen und die Werte des Grundstromes (($I_A)_1$) und des Effektivstromes ($I_{Aeff}$) dieses Signales zu erstellen.

**3.** Steuerverfahren nach Anspruch 1, dadurch gekennzeichnet, dass es darin besteht, die Zündungsverzögerung des Stromes ($\alpha$) in Bezug auf die einfache, an einer Phase des Motors liegende Spannung zu schätzen, wenn sich die Zündungsverzögerung ($\gamma$), mit der die Schalter gesteuert werden, auf den Strom bezieht.

**4.** Steuerverfahren nach Anspruch 1, dadurch gekennzeichnet, dass es darin besteht, die Zündungsverzögerung des Stromes ($\gamma$) in Bezug auf den in einer Phase des Motors fliessenden Strom zu schätzen, wenn sich die Zündungsverzögerung ($\alpha$), mit der die Schalter gesteuert werden, auf die Spannung bezieht.

**5.** Steuerverfahren nach Anspruch 2, dadurch gekennzeichnet, dass es darin besteht, in mindestens einer Phase der Last die Verzögerung ($\varphi$) des in dieser Phase fliessenden Grundstromes in Bezug auf die einfache, dem Netz entsprechende Spannung zu berechnen.

**6.** Steuerverfahren nach Anspruch 5, dadurch gekennzeichnet, dass die übertragene Leistung (P) ab dem Wert des Grundstromes (($I_A)_1$) mindestens einer Phase der Last und der Verzögerung ($\varphi$) des Grundstromes mindestens einer Phase der Last in Bezug auf die einfache, dem Netz entsprechende Spannung berechnet wird.

**7.** Vorrichtung zur Umsetzung des Verfahrens nach Anspruch 1, dadurch gekennzeichnet, dass sie Ansteuerungsmittel (3) des elektromagnetischen Momentes des Motors umfasst, mit Schätzungsmitteln (4) des elektromagnetischen Momentes ($C_m$) ab der Schätzung der vom Netz an den Motor übertragenen Leistung und der Schätzung der statorischen Verluste des Motors, einem Komparator (5) zur Ermittlung eines Fehlersignals ($\varepsilon$) zwischen dem geschätzten Wert des Momentes und einem Sollwert ($C_{soll}$), und einem Integrator (6) zur Bearbeitung des besagten Fehlersignals und Ableitung eines Zündungsverzögerungswertes für den Steuerkreis (2).

**8.** Vorrichtung zur Umsetzung des Verfahrens nach Anspruch 7, dadurch gekennzeichnet, dass die Mittel (4) mindestens ein Stromleseorgan (40) umfassen, um ein für den in mindestens einer Phase des Motors fliessenden Strom repräsentatives Signal zu liefern, und jeweilige Berechnungsblöcke (44, 45, 46) der vom Netz an den Motor übertragenen Leistung (P), der statorischen Verluste (S) und des Momentes ($C_m$) des Motors.

**9.** Vorrichtung zur Umsetzung des Verfahrens nach Anspruch 7 oder 8, dadurch gekennzeichnet, dass die Mittel (4) ein Berechnungsorgan des Stromes (41) umfassen, um in mindestens einer Phase des Motors den Wert des Grundstromes und den Wert des Effektivstromes zu ermitteln, einen Messblock (42) der Zündungsverzögerung ($\alpha$ oder $\gamma$) mindestens eines Schalterpaares in Bezug auf die Spannung oder den Strom, und einen Berechnungsblock (43) der Verzögerung ($\varphi$) des Grundstromes in Bezug auf die einfache Spannung in mindestens einer Phase des Motors.

## Claims

1. Control process for a motor using a graduator (1) connected firstly to an AC network with a fixed frequency, and secondly to the motor, and comprising static switches associated with at least one motor phase and controlled by a control circuit (2), characterized in that:

   - the motor electromagnetic torque ($C_m$) is servocontrolled to a set value ($C_{cons}$) that is variable in the motor start up and deceleration steps;
   - the process consists of estimating the value of the motor torque ($C_m$), determining an error signal ($\varepsilon$) providing information about the difference between the estimated torque and the set value, processing the said error signal to generate the trigger delay ($\gamma$ or $\alpha$) at which the switches are controlled;
   - the torque is estimated starting from an estimate of the power (P) transmitted to the motor through the network and an estimate of the motor stator losses (S).

2. Control process according to claim 1, characterized in that it consists of measuring the current signal ($I_A$) circulating in at least one load phase, and setting up fundamental values of the current ($(I_A)_1$) and the rms current ($I_{arms}$) of this signal.

3. Control process according to claim 1, characterized in that it consists of estimating the current trigger delay ($\alpha$) referenced to the simple voltage applied to a motor phase when the trigger delay ($\gamma$) at which the switches are controlled is referenced to the current.

4. Control process according to claim 1, characterized in that it consists of estimating current trigger delay ($\gamma$) referenced to the current circulating in a motor phase, when the trigger delay ($\alpha$) at which the switches are controlled is referenced to the voltage.

5. Control process according to claim 2, characterized in that it consists of calculating the delay ($\varphi$) of the fundamental of the current circulating in at least one load phase, with respect to the corresponding simple network voltage.

6. Control process according to claim 5, characterized in that the transmitted power (P) is calculated starting from the value of the fundamental ($(I_A)_1$) of the current in at least one load phase, and the delay ($\varphi$) of the fundamental of the current in at least one load phase, with respect to the corresponding simple network voltage.

7. Device for embodiment of the process according to claim 1, characterized in that it comprises means (3) of servocontrolling the electromagnetic torque of the motor comprising means (4) of estimating the torque ($C_m$) starting from the estimate of the power transmitted by the network to the motor and the estimate of the motor stator losses, a comparator (5) to determine an error signal ($\varepsilon$) between the estimated value of the torque and a set value ($C_{cons}$) and an integrator (6) to process the said error signal and to deduce a value of the trigger delay imposed on the control circuit (2).

8. Device for embodiment of the process according to claim 7, characterized in that the means (4) comprise at least one current readout device (40) to supply a signal representing the current circulating in at least one motor phase, and calculation modules (44, 45, 46) calculating the power (P) transmitted through the network to the motor, the stator losses (S) and the motor torque ($C_m$).

9. Device for embodiment of the process according to claim 7 or 8, characterized in that the means (4) comprise a current calculation device (41) to determine the value of the current fundamental and the value of the rms current in at least one motor phase, a module (42) measuring the trigger delay ($\alpha$ or $\gamma$) of at least one pair of switches referenced to the voltage or to the current, and a calculation module (43) for calculating the delay ($\varphi$) of the current fundamental on the simple voltage in at least one motor phase.

FIG. 1

Vitesse

FIG.2a

temps

Couple

FIG.2b

temps

Puissance

FIG.2c

temps

Vitesse

FIG.3a

temps

Puissance

FIG.3b

temps

Couple

FIG.3c

temps